# EUROPÄISCHE PATENTSCHRIFT

(11) **EP 0 988 177 B1**
(45) Veröffentlichungstag und Bekanntmachung des Hinweises auf die Patenterteilung: **27.03.2002**
(21) Anmeldenummer: 98941235.8
(22) Anmeldetag: 19.06.1998
(51) Int. Cl.: B60P 7/08

(54) **ANORDNUNG ZUR LADEGUTSICHERUNG**
DEVICE FOR IMMOBILIZING FOR LOADED GOODS
DISPOSITIF D'IMMOBILISATION POUR MARCHANDISES

(30) Priorität: 20.06.1997 DE 19727688
(43) Veröffentlichungstag der Anmeldung: 29.03.2000
(73) Patentinhaber: RUD-KETTENFABRIK RIEGER & DIETZ GMBH U. CO., 73432 Aalen-Unterkochen (DE)
(72) Erfinder: LIESCH, Thomas, D-73463 Westhausen (DE); SCHAFFNER, Klaus, D-73433 Aalen (DE)
(74) Vertreter: Böning, Manfred, Prof.Dr.-Ing.
(86) Internationale Anmeldenummer: DE9801762
(87) Internationale Veröffentlichungsnummer: WO9858820

(56) Entgegenhaltungen:
- DE-A- 19 536 638
- GB-A- 2 095 366
- US-A- 4 314 783

## Beschreibung

Die Erfindung betrifft eine Anordnung zur Sicherung von Ladegut auf Pritschen von Fahrzeugen, bei der das Ladegut zur Unterbindung von Verschiebungen in und entgegen der Fahrtrichtung mit Hilfe von Spannketten gesichert ist, die an einem Querbalken angreifen, durch den das Ladegut mit einer durch jeweils eine Spannvorrichtung einstellbaren Spannkraft gegen ein Widerlager drückbar ist.

Eine ausreichende Ladegutsicherung auf Fahrzeugen schreiben insbesondere die Straßenverkehrsordnung und berufsgenossenschaftliche Vorschriften zwingend vor. Der Möglichkeiten, den gesetzlichen Bestimmungen Rechnung zu tragen, gibt es viele. Anzustreben sind in allen Fällen ein hohes Maß an Sicherheit und eine problemlose Handhabbarkeit, die nicht nur ein schnelles Arbeiten ermöglicht, sondern auch für nicht besonders geschultes Personal leicht erkennen läßt, ob die durch die Spannketten aufgebrachten Spannkräfte ausreichend hoch sind. Eine Möglichkeit zur Überwachung der Spannkräfte bieten Spannvorrichtungen mit integrierter Lastanzeige, wie sie in der DE 28 22 549 A1 offenbart sind. Die bekannten Spannvorrichtungen werden zwischen Spannkettenstrangabschnitten angeordnet und vermögen insofern nicht voll zu befriedigen, als die Lage ihres Lastanzeigeteiles sich beim Spannvorgang verändert und daher nicht ständig einsehbar ist. Hinzukommt, daß die Einsehbarkeit völlig entfällt, wenn das Ladegut mit einer Plane abgedeckt wird.

Der Erfindung liegt die Aufgabe zugrunde, eine Anordnung mit den eingangs genannten Merkmalen so auszugestalten, daß ihr Anzeigeteil unabhängig vom Spannungszustand der Spannketten und davon, ob das Ladegut abgedeckt ist oder nicht, problemlos einsehbar ist.

Zur Erreichung des gesetzten Zieles wird eine Anordnung vorgeschlagen, die erfindungsgemäß dadurch gekennzeichnet ist, daß ein Ende einer jeden Spannkette lösbar mit einem gegen die Wirkung einer Rückstellkraft verlagerbaren Teil eines an einer Stirnwand der Pritsche befestigten Spannkraftanzeigegerätes verbunden ist.

Die erfindungsgemäße Anordnung vereinigt in sich die Vorteile eines übersichtlichen und einfachen Aufbaues und die Vorteile der leichten Handhabbarkeit.

Weitere Einzelheiten und Merkmale der Erfindung ergeben sich aus den Unteransprüchen und der nachstehenden Beschreibung zweier in der beigefügten Zeichnung dargestellter, besonders vorteilhafter Ausführungsformen. Es zeigen:
Fig. 1 die perspektivische Ansicht einer erfindungsgemäßen Anordnung,
Fig. 2 die Vorderansicht eines Spannkraftanzeigegerätes der Anordnung gemäß Fig. 1,
Fig. 3 einen Schnitt längs der Linie III-III in Fig. 2,
Fig. 4 die perspektivische Ansicht einer Anordnung mit modifizierten Spannkraftanzeigegeräten,
Fig. 5 die Vorderansicht eines modifizierten Spannkraftanzeigegerätes, und
Fig. 6 einen Schnitt längs der Linie VI-VI in Fig. 5.

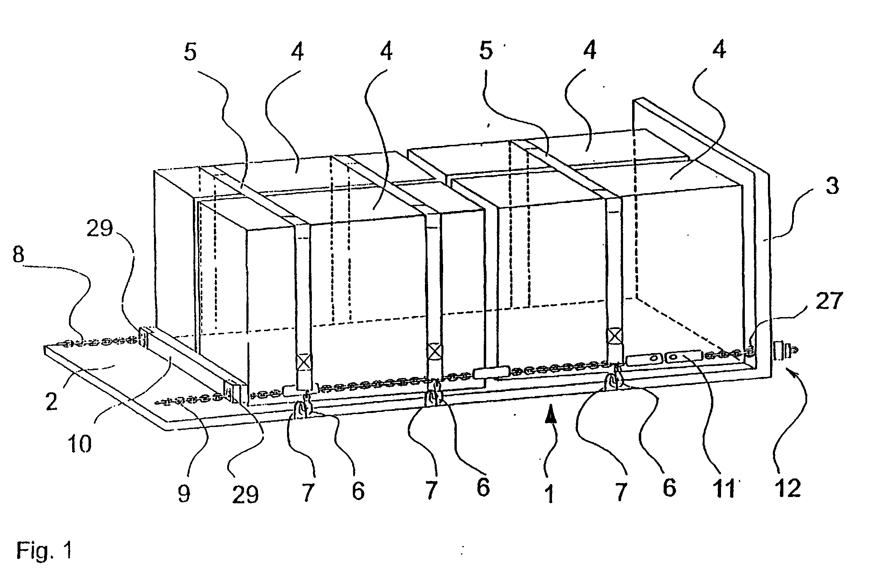

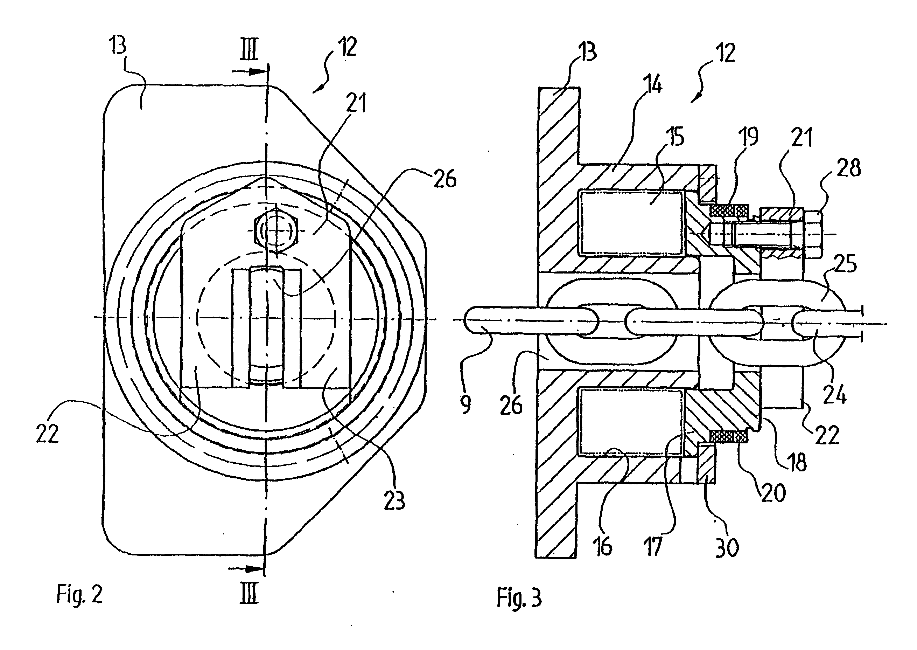

In Fig. 1 ist 1 eine abnehmbare Pritsche für ein Transportfahrzeug. Die Pritsche 1 besteht aus einem Boden 2 und einer an dessen dem Führerhaus eines nicht dargestellten Fahrzeuges zugewandten Ende angeordneten Stirnwand 3. Auf dem Boden 2 der Pritsche 1 sind vier Container 4 abgesetzt, die durch Zurrgurte 5 niedergehalten werden, welche mit an ihren Enden angeordneten Haken 6 in Verzurrösen 7 eingehängt sind. Die Zurrgurte 5 verhindern beim Überfahren von Unebenheiten einer Fahrbahn ein Springen der Ladung auf der Ladefläche und wirken zudem einem Kippen oder Querrutschen der Ladung unter der Einwirkung von Fliehkräften beim Kurvenfahren oder bei Ausweichmanövern entgegen. Um die Ladung beim Überführen der Pritsche auf ein Fahrzeug bzw. beim Abladen der Pritsche vom Fahrzeug sowie bei starken Bremsvorgängen gegen ein Verrutschen in Fahrtrichtung oder beim schnellen Anfahren, insbesondere an Steigungen entgegen der Fahrtrichtung, zu sichern, ist die Pritsche 1 mit einer Anordnung ausgestattet, zu der zwei Spannketten 8 und 9 gehören, mit deren Hilfe über einen Querbalken 10 eine Kraft in Richtung der Stirnwand 3 auf die Container 4 ausgeübt werden kann. Zum Spannen der Spannketten 8,9 dienen dabei sogenannte, in die Kettenstränge integrierte Spindelspanner 11. Es versteht sich, daß die Gewähr für eine einwandfreie Ladungssicherung nur dann gegeben ist, wenn die in den Spannketten 8 und 9 wirksamen Spannkräfte hinreichend groß sind. Um dies überprüfen zu können, sind an der Stirnwand 3 Spannkraftanzeigegeräte 12 befestigt, von denen in Fig. 1 eines erkennbar ist, und deren Aufbau die Figuren 2 und 3 zeigen. Die beschriebene Lage der Spannkraftanzeigegeräte 12 ermöglicht die Überprüfung der Spannkraft problemlos auch bei durch Planen abgedecktem Ladegut. Jedes Spannkraftanzeigegerät besitzt ein mit einem Befestigungsflansch 13 versehenes Gehäuse 14 für eine Rückstellfeder 15. Gegen die in einer Ringnut 16 untergebrachte Rückstellfeder 15 liegt ein in der Ringnut 16 geführter Ringsteg 17 eines Druckkörpers 18 an, der an seinem Umfang mit zwei, eine Markierung bildenden Ringen 19,20 versehen ist, die unterschiedliche Farben aufweisen. Im dargestellten Fall ist der Ring 19 rot und der Ring 20 grün ausgebildet. Mit dem Druckkörper 18 läßt sich über eine gabelförmige Sperrlasche 21 jeweils eine Spannkette 8 bzw. 9 verbinden. Die Verbindung wird dadurch bewerkstelligt, daß die Halteleisten 22,23 bildenden Zinken der Sperrlasche 21 einen Anschlag für den Bug eines Kettengliedes 24 bilden, das auf das von den Halteleisten 22,23 der Sperrlasche 21 umfaßte Kettenglied 25 folgt. Vor dem Anbringen der Sperrlasche 21 wird der jeweilige Kettenstrang 8 oder 9 durch fluchtende Bohrungen 26 und 27 des Gehäuses 14 und der Stirnwand 3 gefädelt. Sobald die Kettenstränge 8,9 eine gestreckte Lage einnehmen, erfolgt die Anbringung der Sperrlaschen 21 und deren Arretierung durch von jeweils einer Schraube 28 gebildete Sicherungselemente. Da die der Stirnwand 3 abgewandten Enden der Kettenstränge 8,9 durch Sperrschlösser 29 im Querbalken 10 gehalten werden, kann nunmehr durch Betätigen der Spindelspanner 11 die erforderliche Spannkraft aufgebracht werden; sie ist erreicht, sobald der rote Ring 19 in das Gehäuse 14 eingetaucht ist und der grüne Ring 20 mit der Anschlagscheibe 30 fluchtet. Bei Überschreitung der zutreffenden Spannkraft taucht auch der grüne Ring 20 in das Gehäuse 14 ein.

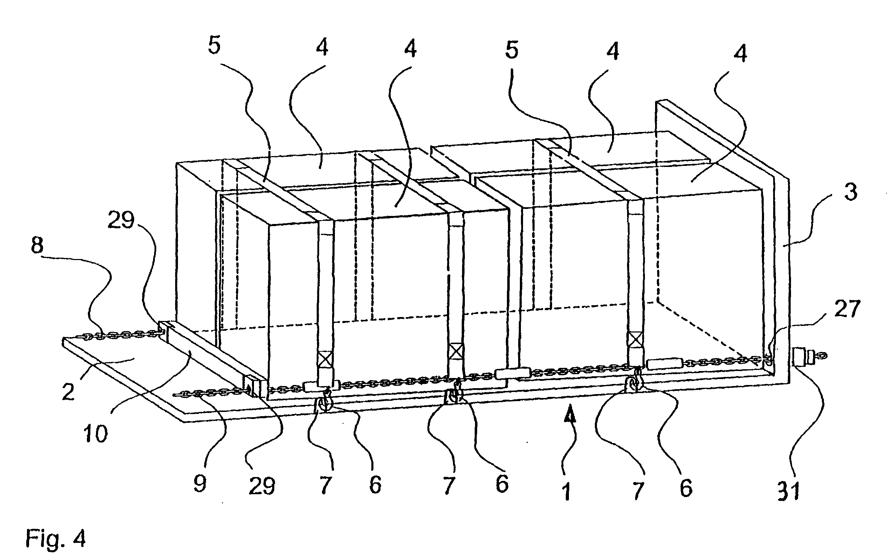

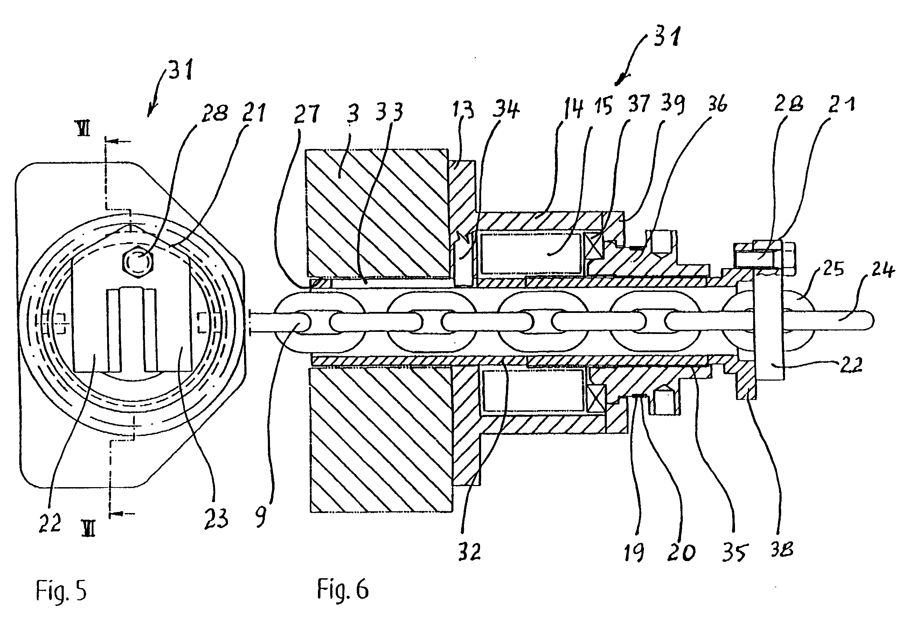

Als besonders vorteilhaft erweist sich eine in den Fig. 4 bis 6 dargestellte Ausführungsform, bei der die Spindelspanner 11 entbehrlich sind, weil bei ihr ein mit einer Spannvorrichtung kombiniertes Spannkraftanzeigegerät 31 zum Einsatz gelangt. Das modifizierte Spannkraftanzeigegerät 31 weist eine durch die ihm zugeordnete Bohrung 27 in der Stirnwand 3 ragende Hülse 32 mit einem Langloch 33 auf, in das ein im Befestigungsflansch 13 angeordneter Stift 34 ragt, der die Hülse 32 gegen Drehbewegungen sichert und gleichzeitig ihre Längsbeweglichkeit begrenzt. Der Befestigungsflansch 13 wird auch in diesem Fall von einem Teil eines Gehäuses 14 gebildet, das zur Aufnahme einer Rückstellfeder 15 dient.

Die Hülse 32 ist auf einem Teil ihrer Länge mit einem Außengewinde 35 versehen. Auf den mit dem Außengewinde 35 versehenen Teil der Hülse 32 ist ein nach Art einer Mutter ausgebildeter Druckkörper 36 geschraubt, der sich über ein Axiallager 37 auf der Feder 15 abstützt. Der Druckkörper 36 trägt auch in diesem Fall zwei zur Spannkraftanzeige nutzbare Ringe 19 und 20, von denen der Ring 19 wiederum rot und der Ring 20 wiederum grün ist. Am Ende der Hülse 32 ist ein Stützring 38 für eine Sperrlasche 21 mit Halteleisten 22 und 23 angeordnet. Die Sperrlasche 21 ist mittels einer Schraube 28 am Stützring 38 befestigt. Zum Spannen der Spannketten 8 bzw. 9 wird in den Druckkörper 36 solange eine Schraubbewegung eingeleitet, bis der rote Ring 19 aus dem Sichtfeld des Benutzers verschwindet und lediglich der grüne Ring 20 noch über die vordere Gehäuseabdeckung 39 vorsteht.

Die beschriebenen Anordnungen eignen sich im besonderen Maße für den Einsatz in Verbindung mit Wechselpritschen, da beim Auf- und Abladen derartiger Pritschen nach dem sogenannten Haken-Abrollsystem nicht unerhebliche Kräfte auftreten, die durch die Spannketten 8,9 und den an unterschiedlichen Stellen der letzteren anbringbaren Querbalken 10 aufgenommen werden müssen.

## Patentansprüche

1. Anordnung zur Sicherung von Ladegut auf Pritschen (1) von Fahrzeugen, bei der das Ladegut zur Unterbindung von Verschiebungen in und entgegen der Fahrtrichtung mit Hilfe von Spannketten (8,9) gesichert ist, die an einem Querbalken (10) angreifen, durch den das Ladegut (4) mit einer durch jeweils eine Spannvorrichtung (11) einstellbaren Spannkraft gegen ein Widerlager drückbar ist, **dadurch gekennzeichnet, daß** ein Ende einer jeden Spannkette (8,9) lösbar mit einem gegen die Wirkung einer Rückstellkraft verlagerbaren, zur Anzeige der Größe der Spannkraft nutzbaren Teil (18,36) eines an einer Stirnwand (3) der Pritsche (1) befestigten Spannkraftanzeigegerätes (12,31) verbunden ist.

2. Anordnung nach Anspruch 1, **dadurch gekennzeichnet, daß** die Stirnwand (3) und das an deren dem Querbalken (10) abgewandten Seite befestigte Spannkraftanzeigegerät (12,31) mit fluchtenden Bohrungen für die Spannketten (8,9) versehen sind.

3. Anordnung nach Anspruch 1 oder 2, **dadurch gekennzeichnet, daß** das Spannkraftanzeigegerät (12) ein Gehäuse (14) zur Aufnahme eines zur Erzeugung der Rückstellkraft dienenden Federorganes (15) aufweist.

4. Anordnung nach Anspruch 3, **dadurch gekennzeichnet, daß** das verlagerbare Teil von einem Druckkörper (18,36) gebildet wird, der mit jeweils einer Spannkette (8 bzw. 9) verbunden ist und dessen Ende sich gegen das Federorgan (15) abstützt.

5. Anordnung nach einem oder mehreren der Ansprüche 1 bis 4, **dadurch gekennzeichnet, daß** zur Verbindung der Spannketten (8,9) mit dem Spannkraftanzeigegerät (12,31) über die Längsschenkel eines Gliedes (25) der jeweiligen Spannkette (8,9) schiebbare Sperrlaschen (21) dienen, gegen deren Halteleisten (22,23) sich der Bug des Kettengliedes (24) abstützt, das auf das von den Halteleisten (22,23) übergriffene Kettenglied (25) folgt.

6. Anordnung nach Anspruch 5, **dadurch gekennzeichnet, daß** die Sperrlaschen (21) an den Stirnseiten des Spannkraftanzeigerätes (12,31) durch Sicherungselemente (28) arretiert sind.

7. Anordnung nach einem der Ansprüche 4 bis 6, **dadurch gekennzeichnet, daß** der Druckkörper (18,36) an seinem Umfang mindestens eine das Erreichen einer ausreichenden Spannkraft signalisierende Markierung (19,20) aufweist.

8. Anordnung nach Anspruch 7, **dadurch gekennzeichnet, daß** die Markierung (19,20) von mindestens einem den Druckkörper (18,36) umgebenden farbigen Ring gebildet wird, der bei Erreichen der erforderlichen Spannkraft in das Gehäuse (14) des Spannkraftanzeigegerätes (12,31) eintaucht.

9. Anordnung nach einem oder mehreren der Ansprüche 1 bis 7, **dadurch gekennzeichnet, daß** zum Einleiten der Spannkraft in die Spannketten (8,9) als Spindelspanner (11) ausgebildete Spannorgane dienen.

10. Anordnung nach einem oder mehreren der Ansprüche 1 bis 8, **dadurch gekennzeichnet, daß** das Spannkraftanzeigegerät (31) mit einer integralen Spannvorrichtung versehen ist.

11. Anordnung nach Anspruch 10, **dadurch gekennzeichnet, daß** zur Spannvorrichtung eine die jeweilige Spannkette (8 bzw. 9) umschließende Hülse (32) mit einem Außengewinde (35) und ein auf letzterem geführter Druckkörper (36) gehören, der sich gegen das Federorgan (15) abstützt.

12. Anordnung nach Anspruch 11, **dadurch gekennzeichnet, daß** zwischen dem Druckkörper (36) und dem Federorgan (15) ein Axiallager (37) angeordnet ist.

13. Anordnung nach Anspruch 11 oder 12, **dadurch gekennzeichnet, daß** die Hülse (32) ein Langloch (33) aufweist, in das ein Stift (34) greift, der die Hülse (32) gegen Drehbewegungen sichert und ihre Längsverschiebbarkeit begrenzt.

14. Anordnung nach einem oder mehreren der Ansprüche 10 bis 13, **dadurch gekennzeichnet, daß** sich die Sperrlasche (21) über einen Stützring (38) gegen die Stirnwand der Hülse (32) abstützt.

15. Anordnung nach einem oder mehreren der Ansprüche 1 bis 14, **dadurch gekennzeichnet, daß** die Pritsche (3) als Wechselpritsche ausgebildet ist.

## Claims

1. Arrangement for securing loadable articles on platforms (1) of vehicles, in the case of which, in order to prevent displacement in and counter to the direction of travel, the loadable articles are secured with the aid of tensioning chains (8, 9) which act on a crossbar (10) by means of which the loadable articles (4) can be forced against an abutment by a tensioning force which can be adjusted by a tensioning device (11) in each case, **characterized in that** one end of each tensioning chain (8, 9) is connected releasably to a part (18, 36) of a tensioning-force indicator (12, 31) fastened on an end wall (3) of the platform (1), it being possible for said part to be displaced counter to the action of a restoring force and to be utilized in order to indicate the magnitude of the tensioning force.

2. Arrangement according to Claim 1, **characterized in that** the end wall (3) and the tensioning-force indicator (12, 31), which is fastened on that side of the end wall which is directed away from the crossbar (10), are provided with aligned bores for the tensioning chains (8, 9).

3. Arrangement according to Claim 1 or 2, **characterized in that** the tensioning-force indicator (12) has a housing (14) for accommodating a spring member (15) which serves for producing the restoring force.

4. Arrangement according to Claim 3, **characterized in that** the displaceable part is formed by a pressure-exerting body (18, 36) which is connected to a respective tensioning chain (8, 9) and the end of which is supported against the spring member (15).

5. Arrangement according to one or more of Claims 1 to 4, **characterized in that**, in order to connect the tensioning chains (8, 9) to the tensioning-force indicator (12, 31), use is made of blocking link plates (21) which can be pushed over the longitudinal legs of a link (25) of the respective tensioning chain (8, 9) and against the retaining limbs (22, 23) of which is supported the front end of the chain link (24) which follows the chain link (25) over which the retaining limbs (22, 23) engage.

6. Arrangement according to Claim 5, **characterized in that** the blocking link plates (21) are arrested by securing elements (28) on the end sides of the tensioning-force indicator (12, 31).

7. Arrangement according to one of Claims 4 to 6, **characterized in that**, on its periphery, the pressure-exerting body (18, 36) has at least one marking (19, 20) which signals that sufficient tensioning force has been reached.

8. Arrangement according to Claim 7, **characterized in that** the marking (19, 20) is formed by at least one coloured ring which encloses the pressure-exerting body (18, 36) and, when the necessary tensioning force has been reached, penetrates into the housing (14) of the tensioning-force indicator (12, 31).

9. Arrangement according to one or more of Claims 1 to 7, **characterized in that**, in order to introduce the tensioning force into the tensioning chains (8, 9), use is made of tensioning members designed as spindle tensioners (11).

10. Arrangement according to one or more of Claims 1 to 8, **characterized in that** the tensioning-force indicator (31) is provided with an integral tensioning device.

11. Arrangement according to Claim 10, **characterized in that** the tensioning device contains a sleeve (32), which encloses the respective tensioning chain (8, 9) and has an external thread (35), and a pressure-exerting body (36), which is guided on said external thread and is supported against the spring member (15).

12. Arrangement according to Claim 11, **characterized in that** an axial bearing (37) is arranged between the pressure-exerting body (36) and the spring member (15).

13. Arrangement according to Claim 11 or 12, **characterized in that** the sleeve (32) has a slot (33) in which a pin (34) engages, said pin securing the sleeve (32) against rotary movements and limiting the longitudinal displaceability of the same.

14. Arrangement according to one or more of Claims 10 to 13, **characterized in that** the blocking link plate (21) is supported against the end wall of the sleeve (32) via a supporting ring (38).

15. Arrangement according to one or more of Claims 1 to 14, **characterized in that** the platform (3) is designed as an interchangeable platform.

## Revendications

1. Aménagement pour fixer des charges sur des plates-formes de transport (1) de véhicules automobiles, dans lequel les charges sont fixées de manière à supprimer tout mouvement dans le sens de déplacement et à l'encontre de celui-ci au moyen de chaînes de tension (8, 9), qui s'accrochent à une poutre transversale (10), par laquelle les charges (4) peuvent être pressées contre une butée via une force de tension réglable respectivement par un dispositif de tension (11), **caractérisé en ce qu'**une extrémité de chaque chaîne de tension (8, 9) est raccordée de manière amovible à une partie (18, 36), déplaçable contre l'action d'une force de rappel et utilisable pour afficher la grandeur de la force de tension, d'un appareil (12,31) indicateur de force de tension fixé à une paroi frontale (3) de la plate-forme de transport (1).

2. Aménagement selon la revendication 1, **caractérisé en ce que** la paroi frontale (3) et l'appareil indicateur de force de tension (12, 31) fixé, sur son côté opposé, à la poutre transversale (10) sont pourvus d'orifices alignés pour les chaînes de tension (8, 9).

3. Aménagement selon la revendication 1 ou 2, **caractérisé en ce que** l'appareil indicateur de force de tension (12) comporte un boîtier (14) pour loger un organe à ressort (15) servant à la production de la force de rappel.

4. Aménagement selon la revendication 3, **caractérisé en ce que** la partie déplaçable est formée d'un-corps de pression (18, 36), qui est relié avec respectivement une chaîne de tension (8 ou 9) et dont l'extrémité s'appuie contre l'organe à ressort (15).

5. Aménagement selon une ou plusieurs des revendications 1 à 4, **caractérisé en ce que**, pour relier les chaînes de tension (8, 9) à l'appareil indicateur de force de tension (12, 31), on se sert d'éclisses de blocage (21) qui peuvent glisser sur la branche longitudinale d'un maillon (25) de la chaîne de tension correspondante (8, 9), contre les languettes de retenue (22, 23) desquelles s'appuie l'avant du maillon de chaîne (24) qui suit le maillon de chaîne (25) engagé sur les languettes de retenue (22, 23).

6. Aménagement selon la revendication 5, **caractérisé en ce que** les éclisses de blocage (21) sont bloquées par des éléments de sécurité (28) sur les côtés frontaux de l'appareil indicateur de force de tension (12, 31).

7. Aménagement selon l'une quelconque des revendications 4 à 6, **caractérisé en ce que** le corps de pression (18, 36) présente sur sa périphérie au moins un repère (19, 20) signalisant qu'une force de tension suffisante a été atteinte.

8. Aménagement selon la revendication 7, **caractérisé en ce que** le repère (19, 20) est formé par au moins un anneau de couleur entourant le corps de pression (18, 36), qui s'enfonce dans le boîtier (14) de l'appareil indicateur de force de tension (12, 31) lorsque la force de tension nécessaire est atteinte.

9. Aménagement selon une ou plusieurs des revendications 1 à 7, **caractérisé en ce que** l'on se sert d'organes de tension conformés en tendeurs à broches (11) pour induire la force de tension dans les chaînes de tension (8, 9).

10. Aménagement selon une ou plusieurs des revendications 1 à 8, **caractérisé en ce que** l'appareil indicateur de force de tension (31) est pourvu d'un dispositif de tension intégral.

11. Aménagement selon la revendication 10, **caractérisé en ce qu'**une douille (32) entourant la chaîne de tension correspondante (8 ou 9) avec un filet externe (35) et un corps de pression (36) guidé sur ledit filet appartiennent au dispositif de tension, ledit corps de pression s'appuyant contre l'organe à ressort (15).

12. Aménagement selon la revendication 11, **caractérisé en ce qu'**un palier axial (37) est agencé entre le corps de pression (36) et l'organe à ressort (15).

13. Aménagement selon la revendication 11 ou 12, **caractérisé en ce que** la douille (32) présente un orifice longitudinal (33) dans lequel s'engage une broche (34), qui bloque la douille (32) en rotation et limite sa capacité de déplacement dans la direction longitudinale.

14. Aménagement selon une ou plusieurs des revendications 10 à 13, **caractérisé en ce que** l'éclisse de blocage (21) s'appuie contre la paroi frontale de la douille (32) par le biais d'un anneau d'appui (38).

15. Aménagement selon une ou plusieurs des revendications 1 à 14, **caractérisé en ce que** la plate-forme de transport (3) est conformée en plate-forme de transport interchangeable.
